# EUROPÄISCHE PATENTSCHRIFT

(11) **EP 0 628 934 B1**
(45) Veröffentlichungstag und Bekanntmachung des Hinweises auf die Patenterteilung: **25.03.1998**
(21) Anmeldenummer: 94107949.3
(22) Anmeldetag: 24.05.1994
(51) Int. Cl.: G07F 7/06, E05B 35/00

(54) **Karte für ein Pfandschloss mit flexiblen Stellen**
Card for refunding lock having flexible areas
Carte pour serrure de consigne avec zones flexibles

(30) Priorität: 04.06.1993 DE 4318627; 08.12.1993 DE 4341791
(43) Veröffentlichungstag der Anmeldung: 14.12.1994
(73) Patentinhaber: VENDORET HOLDING S.A., L-5801 Luxemburg-Hesperange (LU)
(72) Erfinder: Merchel, Horst, D-74321 Bietigheim-Bissingen (DE)
(74) Vertreter: COHAUSZ HASE DAWIDOWICZ & PARTNER

(56) Entgegenhaltungen:
- WO-A-93/04251
- FR-A- 2 595 848
- FR-A- 2 597 140
- FR-A- 2 629 122
- US-A- 5 061 844

## Beschreibung

Die Erfindung betrifft eine Karte für ein Pfandschloß für lösbar aneinander zu befestigende Teile, wie Einkaufswagen oder Gepäckwagen nach dem Oberbegriff von Anspruch 1 (vgl. US-A-4,766,989).

Weiterhin ist eine einschlagige Karte für ein Pfandschloß in der vorangemeldeten nachveröffentlichten Patentanmeldung DE 42 29 332 beschrieben. Hierbei ist es wichtig, daß das Schloß nicht jede Karte akzeptiert, sondern nur durch bestimmte Karten das Kopplungsglied entsperrbar ist.

In der Entgegenhaltung EP-A-0610586 ist eine Pfandwarke mit einer beweglichen Kugel für ein Pfandschloß eines Einkaufwagens offenbart.

Aufgabe der Erfindung ist es, ein Pfandschloß der eingangs genannten Art so zu verbessern, daß aufgrund der bestimmmten Form bzw. Ausgestaltung der konstruktiv einfachen Karte das Kopplungsglied entsperrbar ist.

Diese Aufgabe wird erfindungsgemäß durch die Merkmale des Kennzeichens von Anspruch 1 gelöst.

Durch die Ausbiegbarkeit eines bestimmten kleinen oder großen Bereichs der Karte in eine andere Ebene kann nur durch eine in dieser Weise verformbare Karte das Schloß betätigt werden. Dies kann zum einen dadurch geschehen, daß der verformte oder unverformt gebliebene Bereich das Kopplungsglied direkt oder über Zwischenteile entsperrt. Zum anderen kann es aber auch dadurch erfolgen, daß nur eine richtig ausgeführte Karte in das Schloß einsteckbar ist und durch die Einsteckbarkeit erst ein Entsperren möglich wird.

Hierbei sind Schloß und Karte von einfachster Konstruktion und kleinen Außenabmessungen. Auch wird eine hohe Funktionstüchtigkeit und Sicherheit und einfache Handhabung erreicht.

Vorteilhafte Ausgestaltungen der Karte und eines Schlosses sind in den Unteransprüchen aufgeführt.

Ausführungsbeispiele der Erfindung sind in den Zeichnungen dargestellt und werden im folgenden näher beschrieben. Es zeigen:
- Figur 1:: Einen senkrechten Längsschnitt durch das Pfandschloß bei arretiertem Kopplungsglied.
- Figur 2:: Einen senkrechten Längsschnitt durch das Steuerteil.
- Figur 3:: Eine Draufsicht auf Deckel und Karte.
- Figur 4:: Eine Seitenansicht von Deckel, Karte und Steuerteil.
- Figur 5:: Eine Karte mit einem vorne mündenen Schlitz, der zwei Zungen voneinander trennt.
- Figur 6:: Eine Karte ähnlich Figur 5 mit einem Schlitz, der in einer Erweiterung endet.
- Figur 7:: Eine Karte mit seitlich mündendem Schlitz, der eine Zunge begrenzt.
- Figur 8:: Eine Karte mit einem durch eine Quernut abgeteilten verformbaren Flächenbereich.
- Figur 9:: Eine Karte mit einer innen liegenden Zunge.
- Figur 10:: Eine Karte mit zwei innen liegenden Zungen.
- Figur 11:: Eine Karte mit einer innen liegenden Zunge in Zacken- und Zahnform.
- Figur 12:: Eine Karte mit einer innen liegenden Reihe von Zähnen.
- Figur 13:: Eine Karte mit einer innen liegenden Reihe von Zähnen, in Form eines Schlüssels.
- Figur 14:: Eine Karte mit einem innen liegenden Flächenbereich mit einfach gewölbtem Rand.
- Figur 15:: Eine Karte mit einem innen liegenden Flächenbereich mit zweifach gewölbtem Rand.
- Figur 16:: Eine Karte mit einem innen liegenden Flächenbereich, der quer zur Kartenoberfläche sprungförmig beweglich ist.
- Figur 17:: Eine Karte mit einem innen liegenden Flächenbereich, der aus einem elastischen Material besteht und
- Figur 18:: eine Karte mit einem innen liegenden Flächenbereich, der aus einem weicheren Material besteht als die übrige Kartenfläche ist.

Das Pfandschloß weist ein quaderförmiges Gehäuse 1 auf, das in Form und Abmessungen etwa der doppelten Größe einer Streichholzschachtel entspricht. Das Gehäuse 1 ist am Boden verschlossen und besitzt vier senkrechte Seitenwände und einen inneren Hohlraum, der nach oben hin offen ist und durch einen Deckel 6 verschlossen wird. Der an der Oberseite befestigte Deckel 6 wird von oben aufgedrückt und findet durch seitliche Rasten Halt.

Im Innenraum des Gehäuses 1 ist ein Lagerblock 2 befestigt, insbesondere am Gehäuse angeformt, der mit dem Boden des Gehäuses verbunden ist und über dem ein schlittenförmiges Steuerteil 3 gestülpt ist, das im Querschnitt einem umgekehrten U entspricht. Damit umgreift das Steuerteil 3 mit seinen zwei Seitenwänden 3a die beiden Seiten des Lagerblocks 2.

Im Lagerblock 2 ist quer zur Längsrichtung des Gehäuses 1 ein Schlitz 2a eingebracht, in der ein Schließriegel 4 senkrecht verschieblich gelagert ist. Der Schließriegel 4 weist an seinen beiden seitlichen Enden je einen Zapfen 4a und ein dazwischenliegendes Arretierteil auf, das die sperrende Funktion für ein einsteckbares Kopplungsglied 7 ausübt.

Die Seitenwände 3a des Steuerteils 3 besitzen jeweils einen schrägen Schlitz 3b, in dem jeweils ein Zapfen 4a einliegt. Wird das Steuerteil 3 in Längsrichtung des Gehäuses bewegt, so wird der Schließriegel 4 angehoben oder abgesenkt.

Im Lagerblock 2 ist eine Druckfeder 8 gelagert, die an einer Querwand 3c des Steuerteils 3 anliegt. Durch die Druckfeder 8 wird das Steuerteil 3 in eine Richtung bewegt, in der der Schließriegel 4 durch die Schlitze 3b in die das Kopplungsglied sperrende Stellung bewegt ist. Im Lagerblock 2 ist ein Längskanal 2b eingebracht, der dem Querschnitt des Kopplungsgliedes entspricht und der mit einer Öffnung 1a in der Stirnseite des Gehäuses 1 eines anzukoppelnden Teiles, insbesondere eines Wagens eingesteckt, das bzw. der mit dem Teil bzw. Wagen verkoppelt werden soll an dem das Gehäuse 1 befestigt ist. Das Kopplungslied weist einen Rücksprung, insbesondere eine Öffnung auf. Wird das Kopplungsglied durch die Öffnung 1a in das Gehäuse 1 hineingeschoben, so verschiebt die vordere keilförmige Spitze des Kopplungsglieds das Steuerteil 3 gegen den Druck der Feder 8. Ist das Kopplungsglied bis in seine Endstellung hineingeschoben, so erreicht seine Öffnung den Schließriegel 4, der in die Öffnung einschnappt. Das Kopplungsglied kann dann nicht mehr gewaltsam aus dem Schloß herausgezogen werden.

An dem dem Schließriegel 4 gegenüberliegenden Ende ist im Innern des Gehäuses 1 ein Sicherungsteil 5 senkrecht verschieblich gelagert, das an seiner Oberseite eine Schrägfläche 5a aufweist, die bei eingestecktem Kopplungsglied an einer vorderen Keilfläche des Kopplungsgliedes bzw. dessen Spitze zur Anlage gelangt.

Damit wird durch die Kopplungsgliedspitze das Sicherungsteil 5 gegen den Druck einer in ihr liegenden Druckfeder 9 nach unten in seiner unteren Stellung gehalten.

Das Gehäuse 1 weist an der der Öffnung 1a gegenüberliegenden Stirnseite zwei weitere Öffnungen 1b und 1c auf. In die schlitzförmige Öffnung 1b ist eine Münze als Pfand einsteckbar, die bei unterer Stellung des Sicherungsteils 5 über die Oberseite des Sicherungsteils 5 soweit in das Gehäuse hineingleitet, daß sie nicht, oder nur noch wenig, außen aus dem Gehäuse herausragt. In dieser weiteingestecktesten Stellung der Münze wird die Münze von zwei an der Oberseite des Sicherungsteils 5 vorstehenden seitlichen Vorsprüngen hintergriffen, wenn das Kopplungsglied zumindest teilweise abgezogen ist und das Sicherungsteil 5 sich in seiner oberen Stellung befindet.

Das Sicherungsteil 5 weist darüber hinaus an seiner Oberseite zwei senkrecht vorstehende Stifte 5b auf. Die Stifte 5b ragen in einen Längskanal 11 hinein, der in der schlitzförmigen Öffnung 1c mündet. In die Öffnung 1c und den Kanal 11 ist eine Karte 10, insbesondere in Form einer Kreditkarte oder einer Schlüsselkarte in das Schloß waagerecht einsteckbar, wobei in der Endstellung die in der Karte befindlichen Löcher 10a über den Stiften 5b stehen, so daß in der oberen Stellung des Sicherungsteils 5 die Stifte 5b die Karte gegen ein Herausziehen arretieren.

Die Karte 10 weist an seiner Vorderseite zwei in Kartenlängsrichtung angeordnete Schlitze 16 auf, die in der vorderen Kartenkante münden und zwei außen liegende verbiegbare Zungen 17 (erste Bereiche) von einem mittleren Kartenbereich 18 (zweiter Bereich) trennen. Die Schlitze umgreifen Zapfen 6a, die an der Unterseite des Gehäusedeckels 6 vorstehen, so daß nur Karten 10 einsteckbar sind, die entsprechende Schlitze aufweisen.

Wird die Karte 10 in den Kanal 11 eingeschoben, so stoßen die beiden Zungen 17 jeweils gegen die Schrägfläche 14a eines Vorsprungs 14, der von oben in den Längskanal 11 hineinragt und an der Unterseite des Gehäusedeckels 6 angeformt ist. Hierbei sind im Gehäusedeckel 6 zwei Vorsprünge 14 angeordnet, die jeweils im Bewegungsbereich einer Zunge 17 liegen.

Sobald die Zunge 17 über die Schrägfläche 14a gleiten, werden sie nach unten ausgebogen und gelangen in eine Öffnung 15 des Steuerteils 3, um gegen den Rand der Öffnung 15 zu stoßen, der den Anschlag 3d bildet. Die Zungen 17 verschieben hierdurch das Steuerteil 3.

Wird das Kopplungsglied in die Öffnung 1a eingeschoben, so wird es, wie oben beschrieben, durch den Schließriegel 4 in seiner Endstellung arretiert. In dieser Endstellung drückt das Kopplungsglied das Sicherungsteil 5 in seine den Längskanal 10 und den Münzkanal freigebende Stellung und das Steuerteil 3 befindet sich in seiner den Öffnungen 1b und 1c nahen Stellung, in die das Steuerteil 3 durch die Feder 8 gedrückt wird.

Wird nun in das Schloß eine Münze oder eine Karte 10 eingeschoben, so drückt die Münze gegen die Querwand 3c bzw. die Karte mit ihren Vorderseiten der Zungen 10c gegen den Anschlag 3d am Steuerteil 3. Durch das Einschieben der Münze oder der Karte wird damit das Steuerteil 3 nach rechts von den Öffnungen 1b bzw. 1c weggeschoben gegen den Druck der Feder 8. Hierbei verschiebt das Steuerteil 3 über die Schlitze 3b und die Zapfen 4a den Schließriegel 4 in seine freigebende Stellung. Damit kann das Kopplungsglied frei herausgezogen werden.

Figur 3 zeigt die Karte mit zwei Schlitzen, die an der vorderen Kante der Karte münden und zwei seitliche verbiegbare Zungen bilden. Das Ausführungsbeispiel nach Figur 5 unterscheidet sich hiervon dadurch, daß nur ein längsangeordneter Schlitz 16 in der vorderen Kante mündet und zwei Zungen 17 voneinander trennt. Je nachdem, in welcher Stellung die Karte in das Schloß eingeschoben wird, d.h. ob die Unterseite zuunterst oder zuoberst liegt, wird die eine oder andere Zunge verbogen. Der übrige Kartenbereich 18 bleibt gerade.

Das Ausführungsbeispiel nach Figur 6 unterscheidet sich von dem nach Figur 5 nur dadurch, daß der Schlitz 16 in einer kreisförmigen Erweiterung (Ausnehmung) 19 endet. Dies erhöht die Beweglichkeit der Zungen 17.

Beim Ausführungsbeispiel nach Figur 7 ist der Schlitz 16 quer zur Längsrichtung der Karte und zur Einschieberichtung angeordnet, so daß der Schlitz 16 in einer Längsseite der Karte mündet. Die hierdurch geschaffene Zunge 17 ist in gleicher Weise beweglich wie in den vorherigen Ausführungsbeispielen.

Das Ausführungsbeispiel nach Figur 8 zeigt eine Zunge 17 als verformbarer, d.h. in diesem Fall abbiegbarer Flächenbereich, der durch eine Quernut 20 von der übrigen Karte abgeteilt ist. Diese Quernut 20 führt zu einer Materialverringerung im Bereich der Nut, so daß der Bereich 17 leicht abbiegbar ist. Die Quernut 20 kann hierbei ein- oder beidseitig angeordnet sein und insbesondere als Filmscharnier ausgeführt sein.

Beim Ausführungsbeispiel nach Figur 9 ist die Zunge 17 im Inneren der Karte angeordnet, wobei der Schlitz 16 die Zunge 17 an drei Seiten U-förmig umgibt. Die Zunge liegt hierbei in Kartenlängsrichtung, wobei das freie Ende der Einführungsseite der Karte zugewandt ist.

Beim Herausziehen des Kopplungsgliedes gibt seine Spitze das Sicherungsteil 5 frei, so daß es sich nach oben bewegen kann und mit sem Vorsprung 5a und/oder den Stiften 5b die Münze und/oder die Karte 10 arretiert. Damit bleiben Münze und/oder Karte so lange im Pfandschloß festgehalten, bis das Kopplungsglied wieder eingesteckt wird.

Das Ausführungsbeispiel nach Figur 10 unterscheidet sich von dem nach Figur 9 dadurch, daß zwei Zungen innerhalb der Kartenfläche angeordnet sind, wobei das Zungenende jeder der beiden Zungen der Kartenschmalseite zugewandt ist, die der Zunge näher liegt. Damit kann die Karte mit beiden Schmalseiten wahlweise in das Schloß eingesteckt werden.

Das Ausführungsbeispiel nach Figur 11 unterscheidet sich von dem nach Figur 9 dadurch, daß die Zunge zahnförmig ausgeführt ist, wobei der Schlitz nur eine einzige Abwinklung aufweist.

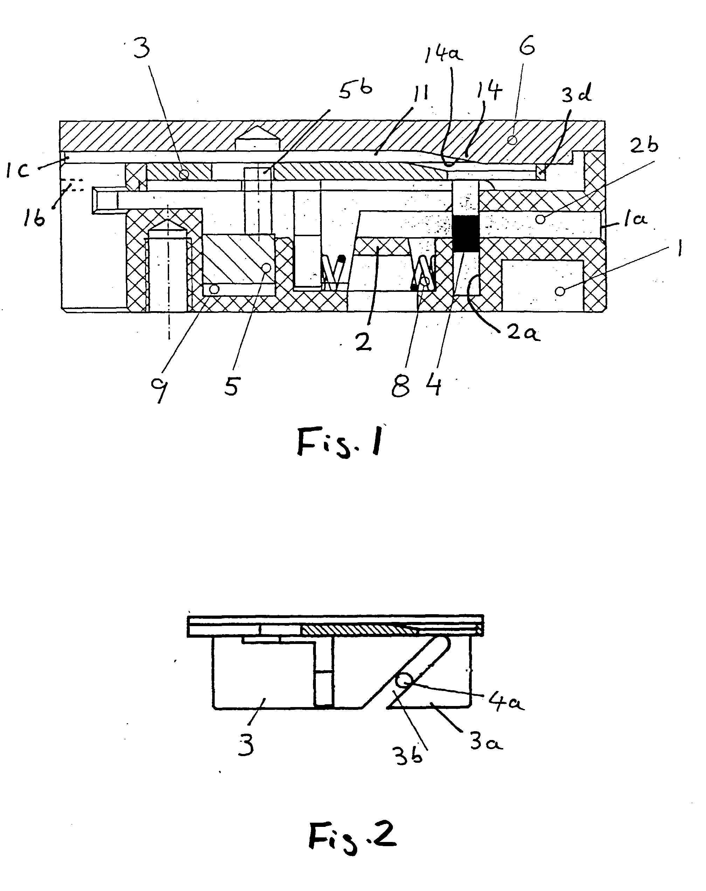

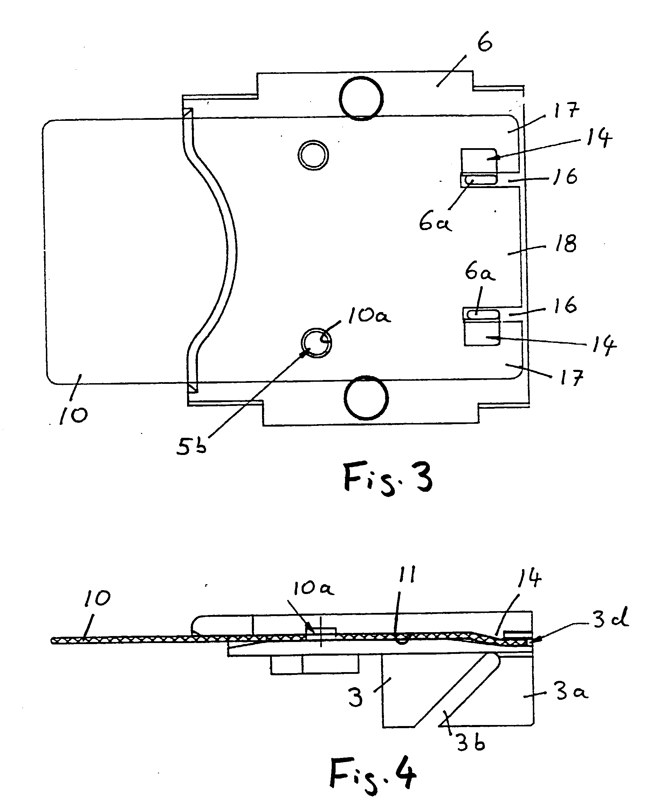

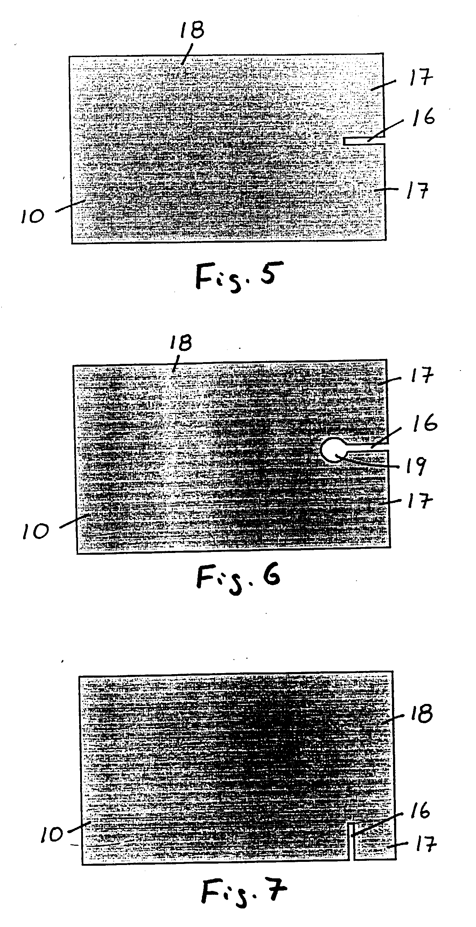

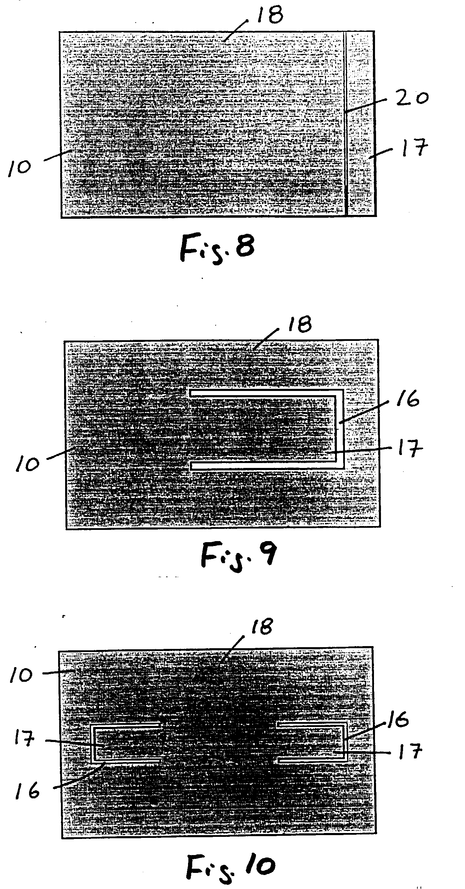

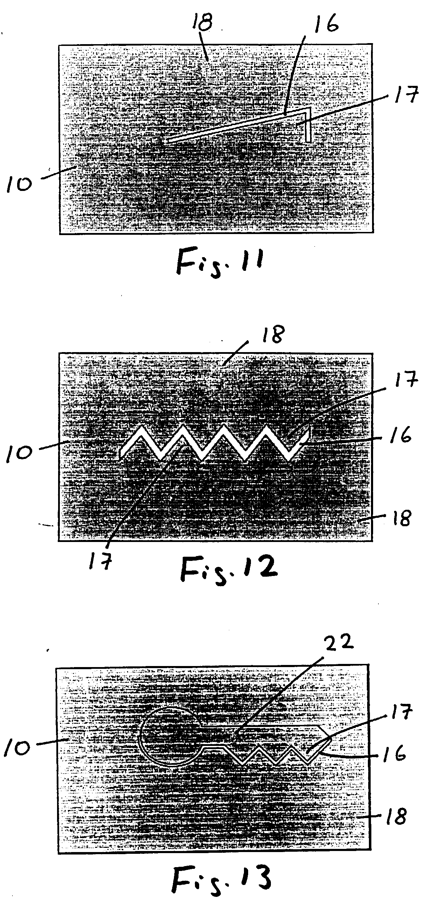

Das Ausführungsbeispiel nach Figur 12 zeigt einen Schlitz 16 in zick-zack-Form, so daß mehrere Zähne zu beiden Seiten des Schlitzes vom Kartenmaterial gebildet werden.

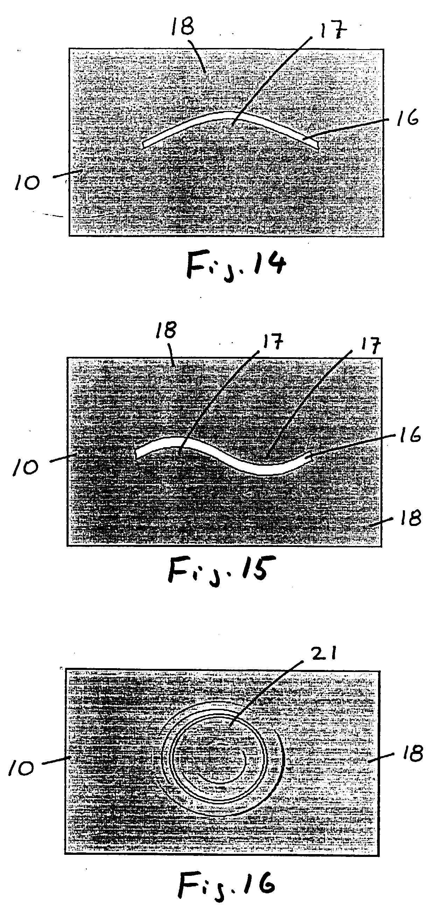

Im Ausführungsbeispiel nach Figur 13 geht die zick-zack-Form in die Form einer Schlüsselabbildung über, so daß die Zacken einer Seite den Bart des Schlüssels 20 bilden.

Im Ausführungsbeispiel nach Figur 14 ist der Schlitz 16 gewölbt ausgeführt, so daß eine Zunge oder ein Flächenbereich mit gewölbtem Rand entsteht, durch den das Schloß betätigbar ist.

Das Ausführungsbeispiel nach Figur 15 unterscheidet sich von dem nach Figur 14 nur dadurch, daß der Schlitz eine Doppelwölbung besitzt, so daß zwei gewölbte Zungen zu beiden Seiten ausgebildet sind.

In allen bisher beschriebenen Ausführungsbeispielen kann die Karte auf jeweils zwei verschiedene Arten verwendet werden. Entweder wird die Zunge, bzw. werden die Zungen gegenüber der Karte ausgebogen oder aber die gesamte Karte, d.h. der übrige Kartenbereich 18 wird verbogen, so daß dann die Zunge nicht oder weniger stark verbogen wird und damit aus der Kartenfläche hervorsteht, um mit diesem vorstehenden Bereich das Schloß zu betätigen.

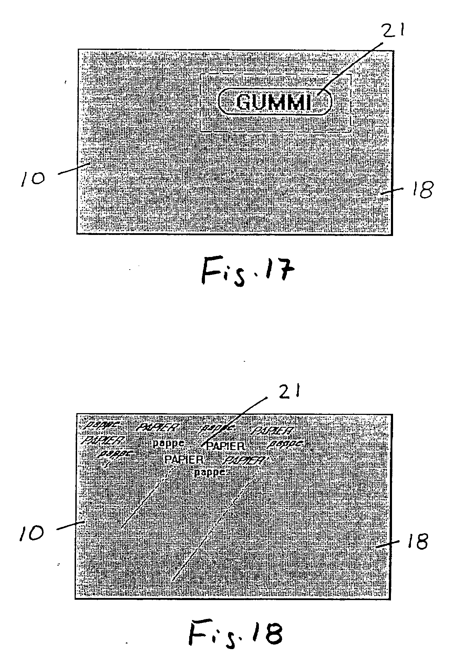

Beim Ausführungsbeispiel nach Figur 16 ist ein beweglicher Bereich 21 innerhalb der übrigen Kartenfläche 18 angeordnet. Dieser Bereich 21 kann sprungweise beweglich sein, d.h. der kreisförmige Rand des Bereichs 21 ist in einer solchen Weise verformt, daß ein Sprungwerk gebildet wird, das eine sprungförmige Hin- und Rückbewegung des Bereichs 21 erzeugt, sobald auf den Bereich 21 gedrückt wird, bzw. danach wieder losgelassen wird. Zum Betätigen des Bereichs 21 ist im Schloß ein Betätigungsteil, insbesondere ein Stift, Hebelende, Knopf oder ähnliches angeordnet, das etwa rechtwinklig zur Kartenoberfläche auf diese drückt, sobald die Karte in das Schloß eingedrückt wird. Die Kraft für dieses Eindrücken kann dadurch erzeugt werden, daß die Karte mit der vorderen Kante auf ein Schloßteil drückt, das in den Kartenweg vorsteht und diese Kraft auf das Betätigungsteil übertragen wird. Sobald der Bereich 21 aus der Kartenoberfläche vorsteht, wird durch diesen Bereich ein Taster oder Hebel oder ähnliches des Schlosses betätigt, um insbesondere über Zwischenteile eine Freigabe des Schlosses wie oben beschrieben zu erwirken.

Der Bereich 21 bildet somit beim Ausführungsbeispiel nach Figur 16 einen nachgiebigen Bereich, der an irgendeiner Stelle der Karte angeordnet sein kann. In Figur 17 besteht dieser nachgiebige Bereich aus einer elastischen Fläche, insbesondere aus Gummi, d.h. im Bereich 21 findet sich ein anderes Material als das übrige Kartenmaterial.

Das Ausführungsbeispiel nach Figur 18 unterscheidet sich von dem nach Figur 17 dadurch, daß der bewegliche nachgiebige Bereich 21 aus einem weichen Material wie Pappe und/oder Papier besteht. In diesem Ausführungsbeispiel ist es aber auch möglich, daß das Material des Bereichs 21 so weich ausgeführt ist, daß es durchstochen werden kann. Hierzu weist das Schloß einen Nadel- oder nagelförmigen Stift auf. Alternativ kann aber auch das Schloß an der weichen Stelle den Bereich 21 durchstanzen. Das Instrument des Schlosses, daß ein solches Durchstechen oder Durchstanzen erzeugt, durchdringt somit die Kartenfläche und führt damit eine Bewegung aus, die das Entsperren erzeugt. Eine Karte mit dagegen hartem und damit nicht durchstechbarem oder durchstanzbarem Material im Bereich 21 kann damit ein Entsperren nicht erzeugen.

Bei allen Ausführungsbeispielen kann durch den verformten oder durch den unverformt gebliebenen Flächenbereich eine unterschiedliche Wirkung erzeugt werden. Entweder sorgt dieser Flächenbereich durch seine Verformung für ein Entriegeln des Kopplungsgliedes direkt oder über Zwischenteile oder aber dieser Flächenbereich wird nur dazu genutzt, daß nur eine Karte mit einem richtigen Flächenbereich in das Schloß einsteckbar ist und danach, d.h. nach dem Prüfen der Einsteckbarkeit das Schloß durch das weitere Einschieben der Karte ein Entsperren herbeiführt. Hierbei braucht für das Entsperren nicht mehr unbedingt der Flächenbereich tätig zu sein, sondern es kann auch ein anderes Teil der Karte, z.B. ein anderer vorderer Bereich der Kartenstirnseite (des vorderen Kartenrandes) ein Entkoppeln auslösen.

Auf der Karte ist zusätzlich ein Magnetstreifen, durch den Informationen über ein Schreib-/Lesegerät speicherbar und/oder abrufbar sind, das vorzugsweise an der Kasse oder am Eingang/Ausgang eines Geschäftes angeordnet ist. Durch diesen Magnetstreifen erhält die Karte noch zusätzliche Funktionen. Insbesondere können hierdurch Informationen über den Kunden, den Wagen, und/oder über Waren erhalten werden.

Die Karte kann einen elektronischen Chip und/oder eine integrierte Schaltung aufweisen.

## Patentansprüche

1. Pfandschloß für lösbar aneinander zu befestigende Teile, wie Einkaufswagen und Gepäckwagen mit einem am ersten Teil befestigten Schloßgehäuse (1), das eine Öffnung (1b, 1c) für die Karte und eine Öffnung (1a) für ein Kopplungsglied besitzt, das am zweiten Teil befestigt ist und so lange durch einen Schließriegel arretiert gehalten ist, bis die Karte eingeschoben ist, wobei die Karte während des Einschiebens ein Steuerteil (3) bewegt, das den Schließriegel (4) von der sperrenden in die entsperrende Stellung bewegt, **dadurch gekennzeichnet**, daß durch das Einschieben der Karte ein Flächenbereich (17, 21) der Karte durch das Schloß verformbar ist und daß der verformte Flächenbereich oder der übrige unverformte Flächenbereich das Steuerteil direkt oder über ein Zwischenteil bewegt.

2. Pfandschloß nach Anspruch 1,**dadurch gekennzeichnet,** daß der das Schloß betätigende Kartenbereich (17, 21) aus der Kartenebene heraus bewegbar ist.

3. Pfandschloß nach Anspruch 1 oder 2, **dadurch gekennzeichnet,** daß das Verformen des verformbaren Flächenbereichs (17, 21) durch eine Ausnehmung (16) insbesondere einen Schlitz erleichtert ist, der an den verformbaren Flächenbereich angrenzt.

4. Pfandschloß nach Anspruch 3, **dadurch gekennzeichnet,** daß die Ausnehmung (16) in den Kartenrand mündet.

5. Pfandschloß nach Anspruch 3 oder 4,**dadurch gekennzeichnet,** daß die zwei Enden der Ausnehmung (16), insbesondere des Schlitzes in einem Abstand zum Kartenrand liegen.

6. Pfandschloß nach einem der Ansprüche 3 bis 5, **dadurch gekennzeichnet,** daß die Ausnehmung (16), insbesondere der Schlitz in einer Erweiterung (19) endet.

7. Pfandschloß nach einem der Ansprüche 3 bis 6, **dadurch gekennzeichnet,** daß die Ausnehmung (16), insbesondere der Schlitz einen zungenförmigen Flächenbereich (17) umgibt.

8. Pfandschloß nach einem der Ansprüche 3 bis 7, **dadurch gekennzeichnet,** daß der Schlitz (16) in Richtung des Kartenschiebeweges angeordnet ist.

9. Pfandschloß nach einem der vorherigen Ansprüche, **dadurch gekennzeichnet,**daß an der Vorderkante der Karte (10) zwei erste Bereiche, insbesondere Zungen (17) angeordnet sind, die jeweils durch einen Schlitz (16) von dem mittleren zweiten Bereich (18) getrennt sind.

10. Pfandschloß nach Anspruch 9, **dadurch gekennzeichnet,** daß der mittlere Bereich (18) eine größere Breite aufweist als die Breite eines ersten Bereiches (17).

11. Pfandschloß nach einem der vorhergehenden Ansprüche, **dadurch gekennzeichnet,** daß die Ausnehmung (16), insbesondere der Schlitz einen oder mehrere Zähne (17) begrenzt.

12. Pfandschloß nach einem der vorherigen Ansprüche, **dadurch gekennzeichnet,** daß die Ausnehmung (16), insbesondere der Schlitz zickzackförmig ist.

13. Pfandschloß nach einem der vorherigen Ansprüche, **dadurch gekennzeichnet,** daß die Ausnehmung (16), insbesondere der Schlitz einen oder mehrere Bögen aufweist.

14. Pfandschloß nach einem der vorherigen Ansprüche, **dadurch gekennzeichnet,** daß das Verformen des verformbaren Flächenbereichs (17) durch eine nutenförmige Ausnehmung erleichtert ist, die an den verformbaren Flächenbereich angrenzt.

15. Pfandschloß nach einem der vorherigen Ansprüche, **dadurch gekennzeichnet,** daß das Verformen des verformbaren Flächenbereichs (17) durch eine Materialerweichung oder eine Materialdichtenverringerung erleichtert ist.

16. Pfandschloß nach einem der vorherigen Ansprüche, **dadurch gekennzeichnet,** daß der verformbare Flächenbereich (17) aus einem weicheren Material insbesondere Gummi, weichem Kunststoff und/oder Pappe besteht, als der übrige Bereich.

17. Pfandschloß nach einem der vorherigen Ansprüche, **dadurch gekennzeichnet,** daß am verformbaren Flächenbereich (17) ein Randbereich angrenzt, der aus einem weicheren Material insbesondere Gummi, weichem Kunststoff und/oder Pappe besteht, als der übrige Bereich.

18. Pfandschloß nach einem der vorherigen Ansprüche, **dadurch gekennzeichnet,** daß am verformbaren Flächenbereich (17) ein Randbereich angrenzt, der eine geringere Dicke aufweist als der übrige Bereich.

19. Pfandschloß nach einem der vorherigen Ansprüche, **dadurch gekennzeichnet,**daß der aus der Kartenfläche bewegliche Bereich (21) sprungförmig beweglich ist.

20. Pfandschloß nach einem der vorherigen Ansprüche, **dadurch gekennzeichnet,**daß die Karte im Schloß durch den verformten oder den unverformten Flächenbereich prüfbar ist.

## Claims

1. A refunding lock for elements, such as shopping trolleys and baggage trolleys, to be attached releasably to one another, said lock having a lock casing (1) which is attached to the first element and which is formed with an opening (1b, 1c) for the card and an opening (la) for a coupling member and is attached to the second element and is retained locked by a closure bolt until the card is inserted, the card moving during its insertion a control member (3) which moves the closure bolt (4) out of the locking and into the unlocking position, characterized in that by the insertion of the card a surface area (17, 21) of the card can be deformed by the lock, and the deformed surface area or the remaining, undeformed surface area moves the control member directly or via an intermediate member.

2. A refunding lock according to claim 1, characterized in that the area (17, 21) of the card actuating the lock can be moved out of the plane of the card.

3. A refunding lock according to claims 1 or 2, characterized in that the deformation of the deformable surface area (17, 21) is facilitated by a recess (16), more particularly a slot which adjoins the deformable surface area.

4. A refunding lock according to claim 3, characterized in that the recess (16) opens into the edge of the card.

5. A refunding lock according to claims 3 or 4, characterized in that the two ends of the recess (16), more particularly the slot, are situated at a distance from the edge of the card.

6. A refunding lock according to one of claims 3 to 5, characterized in that the recess (16), more particularly the slot terminates in a widening (19).

7. A refunding lock according to one of claims 3 to 6, characterized in that the recess (16), more particularly the slot encloses a tongue-shaped surface area (17).

8. A refunding lock according to one of claims 3 to 7, characterized in that the slot (16) is disposed in the direction of the sliding path of the card.

9. A refunding lock according to one of the preceding claims, characterized in that disposed at the front edge of the card (10) are two first zones, more particularly tongues (17) each of which is separated by a slot (16) from the central second zone (18).

10. A refunding lock according to claim 9, characterized in that the central zone (18) has a greater width than the width of the first zone (17).

11. A refunding lock according to one of the preceding claims, characterized in that the recess (16), more particularly the slot bounds one or more teeth (17).

12. A refunding lock according to one of the preceding claims, characterized in that the recess (16), more particularly the slot is zig-zag-shaped.

13. A refunding lock according to one of the preceding claims, characterized in that the recess (16), more particularly the slot has one or more bends.

14. A refunding lock according to one of the preceding claims, characterized in that the deformation of the deformable surface area (17) is facilitated by a groove-shaped recess which adjoins the deformable surface area.

15. A refunding lock according to one of the preceding claims, characterized in that the deformation of the deformable surface area (17) is facilitated by a softening of the material or a reduction in its density.

16. A refunding lock according to one of the preceding claims, characterized in that the deformable surface area (17) is made from a softer material, more particularly rubber, soft plastics and/or cardboard, than the remaining area.

17. A refunding lock according to one of the preceding claims, characterized in that the deformable surface area (17) is adjoined by a marginal area which is made from a softer material, more particularly rubber, soft plastics and/or cardboard, than the remaining area.

18. A refunding lock according to one of the preceding claims, characterized in that the deformable surface area (17) is adjoined by a marginal area which has a smaller thickness than the remaining area.

19. A refunding lock according to one of the preceding claims, characterized in that the area (21) which can be moved out of the surface of the card can move springily.

20. A refunding lock according to one of the preceding claims, characterized in that the card can be checked in the lock by the deformed or the undeformed surface area.

## Revendications

1. Serrure à consigne pour des pièces à fixer les unes aux autres de manière détachable, comme des chariots d'achat ou des chariots à bagages, avec un boîtier de serrure (1), fixé à la première pièce, qui possède une ouverture (1b,1c) pour la carte et une ouverture (1a) pour un organe d'accouplement qui est fixé à la deuxième pièce et est maintenu arrêté par un pêne de verrouillage jusqu'à ce que la carte soit introduite par coulissement, la carte déplaçant pendant l'introduction par coulissement, une pièce de commande (3) qui déplace le pêne de verrouillage (4) de la position de verrouillage à la position de déverrouillage,
caractérisée en ce qu'une zone de surface (17,21) de la carte est déformable pendant l'introduction par coulissement de la carte, par la serrure et que la zone de surface déformée ou la zone de surface non déformée restante déplace la pièce de commande directement ou par l'intermédiaire d'une pièce intermédiaire.

2. Serrure à consigne selon la revendication 1,
caractérisée en ce que la zone de la carte (17,21) actionnant la serrure est mobile hors du plan de la carte.

3. Serrure à consigne selon la revendication 1 ou 2 ,
caractérisée en ce que la déformation de la zone de surface (17,21) déformable est facilitée par un évidement (16), en particulier une fente, qui est adjacent à la zone de surface déformable.

4. Serrure à consigne selon la revendication 3,
caractérisée en ce que l'évidement (16) débouche dans le bord de la carte.

5. Serrure à consigne selon la revendication 3 ou 4,
caractérisée en ce que les deux extrémités de l'évidement (16), en particulier de la fente, se trouvent à distance du bord de la carte.

6. Serrure à consigne selon l'une des revendications 3 à 5,
caractérisée en ce que l'évidement (16), en particulier la fente, se termine en un élargissement (19).

7. Serrure à consigne selon l'une des revendications 3 à 6,
caractérisée en ce que l'évidement (16), en particulier la fente, entoure une zone de surface (17) en forme de languette.

8. Serrure à consigne selon l'une des revendications 3 à 7,
caractérisée en ce que la fente (16) est disposée dans la direction de déplacement en coulissement de la carte.

9. Serrure à consigne selon l'une des revendications précédentes,
caractérisée en ce que, sur l'arête avant de la carte (10), sont disposées deux premières zones, en particulier des languettes (17), qui sont séparées respectivement de la seconde zone médiane (18) par une fente (16).

10. Serrure à consigne selon la revendication 9,
caractérisée en ce que la zone médiane (18) présente une largeur supérieure à la largeur d'une première zone (17).

11. Serrure à consigne selon l'une des revendications précédentes,
caractérisée en ce que l'évidement (16), en particulier la fente, limite une ou plusieurs dents (17).

12. Serrure à consigne selon l'une des revendications précédentes,
caractérisée en ce que l'évidement (16), en particulier la fente, est en forme de zigzag.

13. Serrure à consigne selon l'une des revendications précédentes,
caractérisée en ce que l'évidement (16), en particulier la fente, présente un ou plusieurs arcs.

14. Serrure à consigne selon l'une des revendications précédentes,
caractérisée en ce que la déformation de la zone de surface (17) déformable est facilitée par un évidement en forme de rainure qui est adjacent à la zone de surface déformable.

15. Serrure à consigne selon l'une des revendications précédentes,
caractérisée en ce que la déformation de la zone de surface (17) déformable est facilitée par un ramollissement de matière ou une diminution d'épaisseur de matière.

16. Serrure à consigne selon l'une des revendications précédentes,
caractérisée en ce que la zone de surface (17) déformable est constituée d'un matériau, en particulier de caoutchouc, de matière synthétique molle et/ou de carton, plus mou que la zone restante.

17. Serrure à consigne selon l'une des revendications précédentes,
caractérisée en ce qu'une zone de bord est adjacente à la zone de surface (17) déformable et est constituée d'un matériau, en particulier de caoutchouc, de matière synthétique molle et/ou de carton, plus mou que la zone restante.

18. Serrure à consigne selon l'une des revendications précédentes,
caractérisée en ce qu'une zone de bord est adjacente à la zone de surface (17) déformable et présente une épaisseur plus faible que la zone restante.

19. Serrure à consigne selon l'une des revendications précédentes,
caractérisée en ce que la zone (21) mobile hors de la surface de la carte est mobile par saut.

20. Serrure à consigne selon l'une des revendications précédentes,
caractérisée en ce que la carte peut être testée dans la serrure par la zone de surface déformée ou la zone de surface non déformée.
